# EUROPEAN PATENT APPLICATION

(11) **EP 4 807 218 A1**
(43) Date of publication of application: **16.09.2026**
(21) Application number: 24888637.6
(22) Date of filing: 01.11.2024
(51) Int. Cl.: F16H 49/00, H02K 15/021

(54) **METHOD FOR MANUFACTURING MAGNETIC MODULATOR, MAGNETIC MODULATOR, AND MAGNETIC MODULATION GEAR**

(30) Priority: 06.11.2023 JP 2023189232
(71) Applicant: Sumitomo Heavy Industries, Ltd., Tokyo 141-6025 (JP)
(72) Inventor: YAMAMOTO Taizo, Yokosuka-shi, Kanagawa 237-8555 (JP); MINARI Takahiro, Yokosuka-shi, Kanagawa 237-8555 (JP); NAKAGAWA Hiroki, Yokosuka-shi, Kanagawa 237-8555 (JP)
(74) Representative: Louis Pöhlau Lohrentz
(86) International application number: PCT/JP2024/039010
(87) International publication number: WO 2025/100340

(57) **Abstract**

A method for manufacturing a magnetic modulation body 50 includes a punching step of punching an electrical steel sheet S into plan-view shapes of magnetic pole pieces 54 to produce a plurality of steel sheet pieces 54a, a stacking step of stacking the plurality of steel sheet pieces 54a to produce a plurality of magnetic pole pieces 54, a disposition step of disposing the plurality of magnetic pole pieces 54 on a circumferential surface of a cylindrical jig 70, and a molding step of performing resin molding such that the plurality of magnetic pole pieces 54 supported by the jig 70 are connected to each other in a circumferential direction with a resin. A plurality of recessed portions 70a into which the plurality of magnetic pole pieces 54 are individually fitted are formed on the circumferential surface of the jig 70.

## Description

### Technical Field

The present invention relates to a method for manufacturing a magnetic modulation body, a magnetic modulation body, and a magnetic modulation gear.

### Background Art

In the related art, a magnetic modulation gear is known in which a plurality of magnetic pole pieces are disposed between two magnet rotors disposed on inner and outer peripheries, and a magnetic flux distribution between the two magnet rotors is modulated.

The plurality of magnetic pole pieces are arranged at equal intervals in a circumferential direction. For example, in the magnetic modulation gears described in PTLs 1 and 2, a structure in which magnetic pole pieces (magnetic bodies) and non-magnetic bodies are alternately arranged and combined in the circumferential direction is adopted.

However, such a structure causes an increase in the number of components, complication of a manufacturing process, and the like. Therefore, a structure in which a plurality of magnetic pole pieces and connecting portions (bridge portions) therebetween are formed of an integrated magnetic material may be adopted.

### Citation List

### Patent Literature

[PTL 1] Japanese Patent No. 5350438
[PTL 2] Japanese Patent No. 5408355

### Summary of Invention

### Technical Problem

However, in a case where a magnetic material integrated with magnetic pole pieces is used as a connecting portion, output performance such as torque and efficiency is reduced due to a leakage magnetic flux through the connecting portion.

The present invention has been made in view of the above circumstances, and an object of the present invention is to obtain suitable output performance.

### Solution to Problem

The present invention relates to a method for manufacturing a magnetic modulation body, the method including:
a punching step of punching an electrical steel sheet into plan-view shapes of magnetic pole pieces to produce a plurality of steel sheet pieces;
a stacking step of stacking the plurality of steel sheet pieces to produce a plurality of magnetic pole pieces;
a disposition step of disposing the plurality of magnetic pole pieces on a circumferential surface of a cylindrical jig; and
a molding step of performing resin molding such that the plurality of magnetic pole pieces supported by the jig are connected to each other in a circumferential direction with a resin,
in which a plurality of recessed portions into which the plurality of magnetic pole pieces are individually fitted are formed on the circumferential surface of the jig.

### Advantageous Effects of Invention

According to the present invention, it is possible to obtain suitable output performance.

### Brief Description of Drawings

FIG. 1 is a sectional view of a magnetic modulation gear according to an embodiment.
FIG. 2 is a sectional view of a magnetic modulation body according to the embodiment.
FIG. 3 is a sectional view taken along line III-III in FIG. 1.
FIG. 4 is a flowchart showing a schematic manufacturing process of the magnetic modulation body.
FIG. 5A is a view for describing a manufacturing process of the magnetic modulation body.
FIG. 5B is a view for describing the manufacturing process of the magnetic modulation body.
FIG. 6A is a view for describing the manufacturing process of the magnetic modulation body.
FIG. 6B is a view for describing the manufacturing process of the magnetic modulation body.
FIG. 6C is a view for describing the manufacturing process of the magnetic modulation body.
FIG. 7A is a view for describing the manufacturing process of the magnetic modulation body.
FIG. 7B is a view for describing the manufacturing process of the magnetic modulation body.
FIG. 7C is a view for describing a manufacturing process of the magnetic modulation body.
FIG. 8A is a view for describing a modification example of a magnetic pole piece according to the embodiment.
FIG. 8B is a view for describing the modification example of the magnetic pole piece according to the embodiment.
FIG. 8C is a view for describing the modification example of the magnetic pole piece according to the embodiment.
FIG. 9 is a view showing punching of a magnetic pole piece in the related art.

### Description of Embodiments

Hereinafter, an embodiment of the present invention will be described in detail with reference to the drawings.

### [Entire Configuration of Magnetic Modulation Gear]

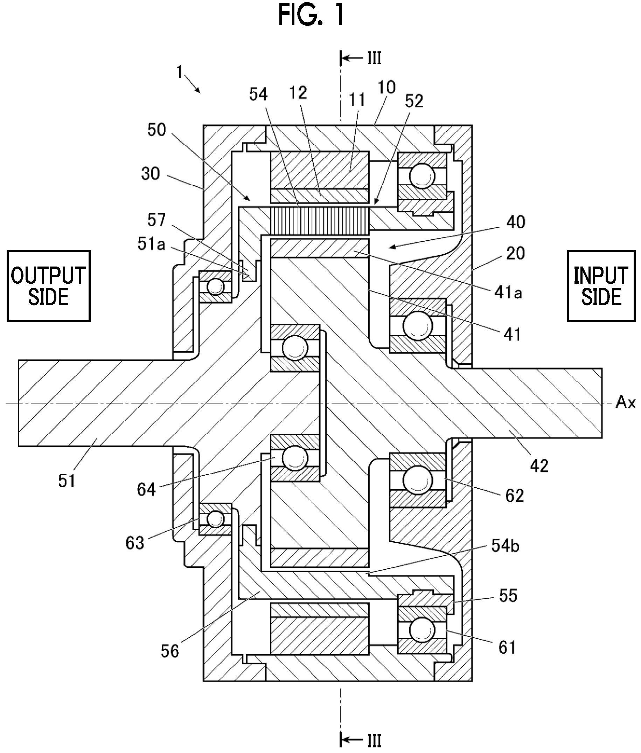

FIG. 1 is a sectional view of a magnetic modulation gear 1 according to the present embodiment.

In the following description, a direction along a center axis Ax of the magnetic modulation gear 1 will be referred to as an "axial direction", a direction perpendicular to the center axis Ax will be referred to as a "radial direction", and a rotation direction around the center axis Ax will be referred to as a "circumferential direction". Further, in the axial direction, a side connected to an external driven member (a left side in the drawing) is referred to as an "output side", and a side opposite thereto (a right side in the drawing) is referred to as an "input side".

As shown in FIG. 1, the magnetic modulation gear 1 according to the present embodiment includes a casing (a frame) 10, an input-side cover 20 and an output-side cover 30 that cover both sides in an axial direction of the casing 10, and an input shaft 40 and a magnetic modulation body 50 whose main portions are accommodated inside the covers.

The casing 10 is formed in a substantially cylindrical shape centered on the center axis Ax, and includes a stator yoke 11 and an outer pole magnet 12 on an inner peripheral portion thereof.

The stator yoke 11 is formed in a cylindrical shape, and is fitted into the casing 10.

The outer pole magnet 12 has a larger number of poles than inner pole magnets 41a of the input shaft 40, which will be described later, and is attached to an inner peripheral surface of the stator yoke 11 such that a plurality of outer pole magnets having different polarities are disposed alternately in the circumferential direction. However, the outer pole magnet 12 may be in the form of an integral ring, or may be divided into pieces arranged in the circumferential direction.

Further, a bearing 61 (for example, a ball bearing) by which the magnetic modulation body 50 is rotatably supported is disposed on the inner peripheral portion of the casing 10 closer to the input side than the stator yoke 11.

The input-side cover 20 is disposed on the input side of the casing 10 and covers an inner opening of the casing 10 from the input side. An outer peripheral portion of the input-side cover 20 is spigot-fitted to the casing 10. In addition, a bearing 62 (for example, a ball bearing) which rotatably supports the input shaft 40 is disposed in an inner peripheral portion of the input-side cover 20.

The output-side cover 30 is disposed on the output side of the casing 10 and covers the inner opening of the casing 10 from the output side.

An outer peripheral portion of the output-side cover 30 is spigot-fitted to the casing 10. In addition, a bearing 63 (for example, a ball bearing) which rotatably supports the magnetic modulation body 50 is disposed in an inner peripheral portion of the output-side cover 30.

The input shaft 40 is a shaft that rotates around the center axis Ax, and includes a disk portion 41 and a motor connecting portion 42. The input shaft 40 is rotatably supported by the bearing 62 disposed between the input-side cover 20 and the input shaft 40 and a bearing 64 disposed between the magnetic modulation body 50 and the input shaft 40.

The disk portion 41 has, at an outer peripheral portion thereof, the inner pole magnet 41a disposed on an inner diameter side of the outer pole magnet 12. The inner pole magnet 41a is, for example, a permanent magnet such as a neodymium magnet, and is attached to an outer peripheral surface of the disk portion 41 such that a plurality of inner pole magnets having different polarities are alternately disposed in the circumferential direction. However, the inner pole magnet 41a may be in the form of an integral ring, or may be divided into pieces arranged in the circumferential direction.

The motor connecting portion 42 extends from the disk portion 41 toward the input side in the axial direction. A tip end side of the motor connecting portion 42 protrudes outward from the input-side cover 20, and this protrusion portion is connected to a motor (not shown).

### [Configuration of Magnetic Modulation Body]

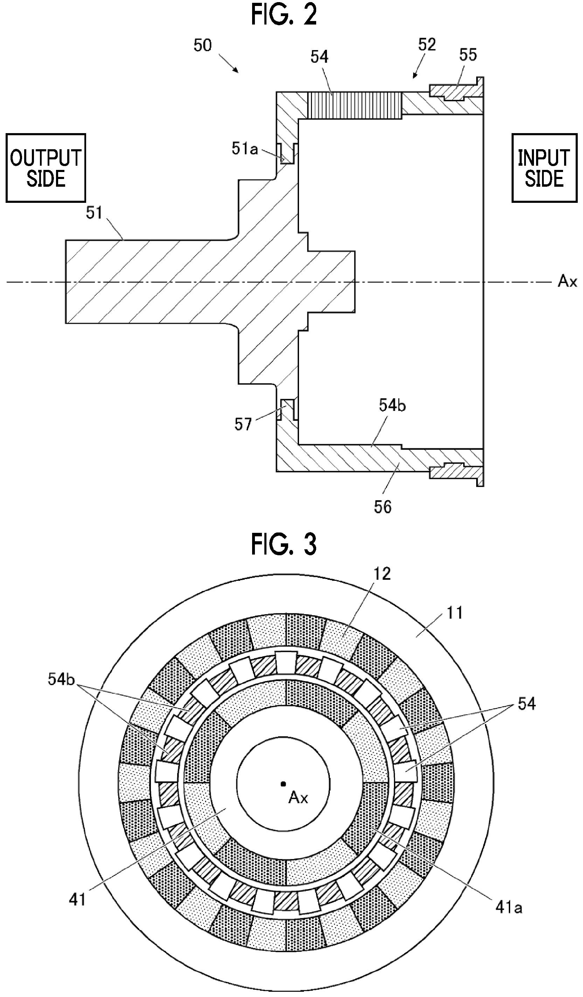

FIG. 2 is a sectional view of the magnetic modulation body 50, and FIG. 3 is a sectional view taken along line III-III of FIG. 1.

As shown in FIGS. 1 and 2, the magnetic modulation body 50 includes an output shaft portion 51 and a cylindrical portion 52.

The output shaft portion 51 is a metal shaft that is rotated about the center axis Ax. Approximately output-side half of the output shaft portion 51 protrudes outward from the output-side cover 30, and this protrusion portion is connected to a driven member (not shown).

A substantially central portion of the output shaft portion 51 in the axial direction is rotatably supported by the bearing 63 disposed between the output-side cover 30 and the output shaft portion 51. In addition, the bearing 64 (for example, a ball bearing) which rotatably supports the input shaft 40 is disposed in an end portion on the input side of the output shaft portion 51. An output-side end portion of the cylindrical portion 52 is connected to an outer peripheral portion of the output shaft portion 51 that is positioned between the bearings 63 and 64 in the axial direction.

The cylindrical portion 52 is formed in a substantially cylindrical shape centered on the center axis Ax, and includes a plurality of magnetic pole pieces 54 disposed at axial positions corresponding to the outer pole magnet 12 and the inner pole magnet 41a.

As shown in FIG. 3, the plurality of magnetic pole pieces 54 are disposed at predetermined intervals in the circumferential direction, and are formed in an annular shape as a whole. The plurality of magnetic pole pieces 54 are concentrically disposed on the inner diameter side of the outer pole magnet 12 and on the outer diameter side of the inner pole magnet 41a with a predetermined gap interposed therebetween. Each magnetic pole piece 54 is configured by stacking thin electrical steel sheets (stacked steel sheets) in the axial direction. The number of the magnetic pole pieces 54 is (the number of outer pole pairs ± the number of inner pole pairs), and is generally (the number of outer pole pairs + the number of inner pole pairs). The number of outer pole pairs is the number of pole pairs of the outer pole magnet 12, and the number of inner pole pairs is the number of pole pairs of the inner pole magnet 41a.

The adjacent magnetic pole pieces 54 in the circumferential direction are connected to each other by a connecting portion 54b interposed therebetween.

The connecting portion 54b is made of a resin, and forms a portion of a resin portion 56 (to be described later).

An outer peripheral surface of the connecting portion 54b is recessed inward from an outer peripheral surface of the magnetic pole piece 54.

However, at least one of an inner peripheral surface and an outer peripheral surface of the connecting portion 54b may be recessed inward from the magnetic pole piece 54. In this case, the other surface may be flush with a corresponding surface of the magnetic pole piece 54.

The magnetic pole piece 54 modulates a spatial magnetic flux waveform formed by the inner pole magnet 41a when the input shaft 40 rotates about the center axis Ax to have the same frequency as the outer pole magnet 12. Then, a rotation torque is transmitted to the magnetic modulation body 50 by using a magnetic force between the magnetic pole piece 54 and the outer pole magnet 12. In this case, a reduction ratio is (the number of the magnetic pole pieces 54/the number of pole pairs of the inner pole magnet). In this case, a mainly radial force due to the inner pole magnet 41a and the outer pole magnet 12 acts on the magnetic pole piece 54.

In this way, a rotating motion input to the input shaft 40 is decelerated, and is output to a driven member (not shown) connected to the output shaft portion 51 of the magnetic modulation body 50.

As shown in FIG. 2, a bearing support ring 55 made of metal (for example, stainless steel) is disposed at an end portion on the input side of the cylindrical portion 52. The bearing support ring 55 is fixed to an outer peripheral portion of the cylindrical portion 52, and an inner ring of the bearing 61 disposed between the bearing support ring 55 and the casing 10 is fitted onto the outer peripheral surface of the bearing support ring 55 (refer to FIG. 1).

A portion of the cylindrical portion 52 excluding the magnetic pole pieces 54 and the bearing support ring 55 is a resin portion 56 made of a resin (for example, super engineering plastic). The resin is also filled between the plurality of magnetic pole pieces 54, and this portion constitutes the connecting portion 54b described above.

An end portion on the output side in the resin portion 56 protrudes toward the inner diameter side, and is connected to the output shaft portion 51. A plurality of protrusion portions 57 protruding toward the inner diameter side are arranged in the circumferential direction on an inner peripheral portion of the end portion. The plurality of protrusion portions 57 are molded to correspond to a plurality of recessed portions 51a on an outer peripheral surface of the output shaft portion 51, and the output shaft portion 51 and the cylindrical portion 52 (resin portion 56) are firmly fixed to each other by engagement between the protrusion portions 57 and the recessed portions 51a. In this manner, a mutual movement of the output shaft portion 51 and the cylindrical portion 52 in the radial direction and the axial direction is suppressed.

### [Manufacturing Process of Magnetic Modulation Body]

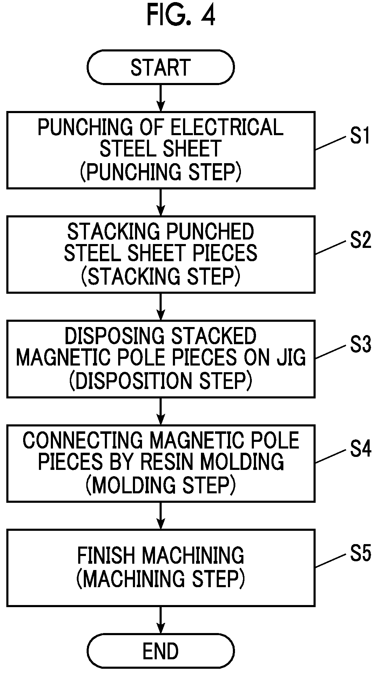

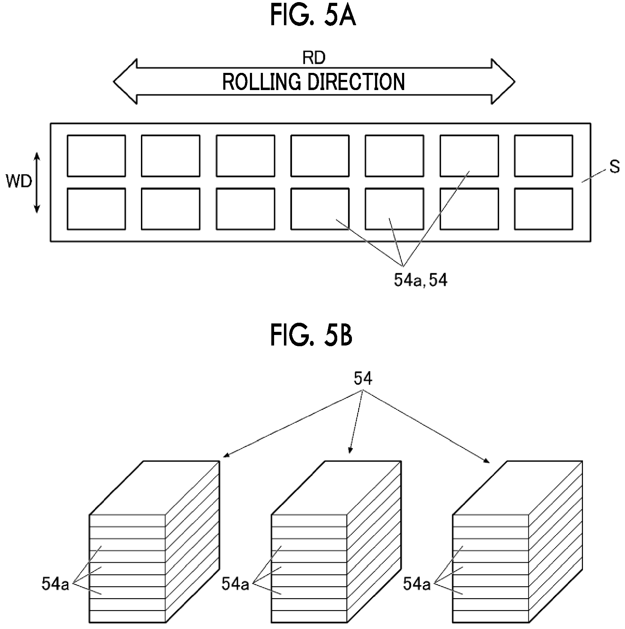

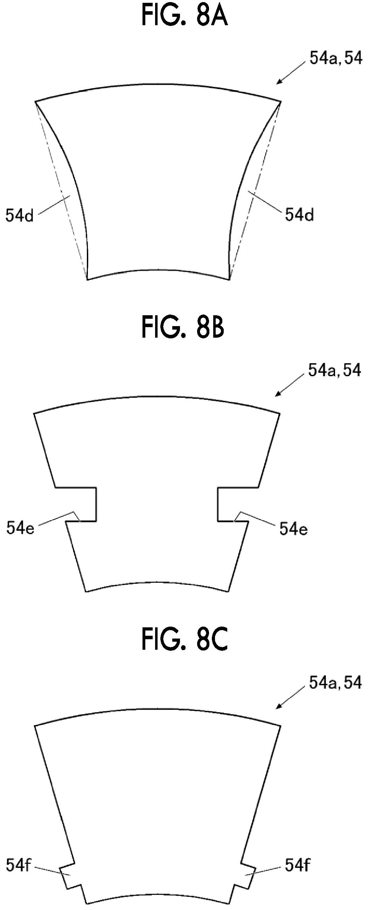

FIG. 4 is a flowchart showing a schematic manufacturing process (manufacturing method) of the magnetic modulation body 50, and FIGS. 5A to 7C are views for describing the manufacturing processes of the magnetic modulation body 50. FIGS. 8A to 8C are views for describing a modification example of the magnetic pole piece 54. In FIGS. 5A and 5B, the shape of the magnetic pole piece 54 (steel sheet piece) is simplified to a square shape instead of a fan shape.

As shown in FIG. 4, in the manufacturing process of the magnetic modulation body 50, first, the magnetic pole pieces 54 are punched out from an electrical steel sheet one by one (Step S1).

Specifically, a sheet-like electrical steel sheet S is punched out in a plan-view shape (shape as viewed from the axial direction) of the magnetic pole piece 54 to produce a required number of steel sheet pieces 54a (FIG. 5A). The steel sheet pieces 54a are arranged so that wasted space on the electrical steel sheet S is reduced, and are punched out.

At this time, the direction of the steel sheet piece 54a is set such that the radial direction of the magnetic modulation gear 1 substantially coincides with a rolling direction RD of the electrical steel sheet S. As a result, the performance of the magnetic modulation gear 1 can be improved.

That is, the electrical steel sheet S has different magnetic characteristics between the rolling direction RD and an orthogonal direction WD orthogonal to the rolling direction RD on the main surface, and the rolling direction RD has a higher magnetic permeability (magnetic flux is more likely to pass) than the orthogonal direction WD. Therefore, by setting the direction of the steel sheet piece 54a corresponding to the radial direction of the magnetic modulation gear 1 to substantially coincide with the rolling direction RD of the electrical steel sheet S, the magnetic flux passing through the magnetic pole piece 54 can be suitably made uniform. As a result, it is possible to suppress a decrease in torque, reduce torque ripple and iron loss, and the like. More accurately, the direction of the steel sheet piece 54a corresponding to the radial direction of the magnetic modulation gear 1 (magnetic modulation body 50) may be set to substantially coincide (correspond) with the rolling direction of the (isotropic) electrical steel sheet. The same effect can be obtained even in a case where the direction of the steel sheet piece 54a corresponding to the radial direction of the magnetic modulation gear 1 is set to correspond to an easy magnetization direction of a grain-oriented electrical steel sheet.

In addition, in the plurality of magnetic pole pieces 54 (or each magnetic pole piece 54), the variation in magnetic characteristics is suppressed by aligning the direction relationship with the rolling direction RD, as compared with a case where the direction relationship is not aligned.

Next, the magnetic pole pieces 54 (steel sheet pieces 54a) punched out from the electrical steel sheet S in Step S1 are stacked by a predetermined axial length (Step S2; FIG. 5B).

In this way, a required number of magnetic pole pieces 54 are produced.

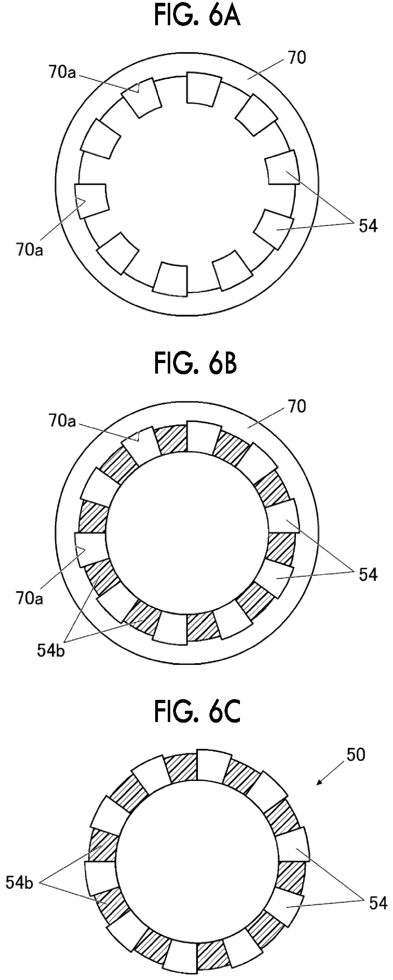

Next, the plurality of magnetic pole pieces 54 are disposed on a jig 70 for molding (Step S3; FIG. 6A).

The jig 70 of the present embodiment supports an outer diameter portion of the magnetic pole piece 54 in the magnetic modulation body 50, and is formed in a cylindrical shape. A plurality of recessed portions 70a that support the outer diameter portions of the plurality of magnetic pole pieces 54 are formed on an inner peripheral surface of the jig 70.

In this step, the plurality of magnetic pole pieces 54 are fitted into the recessed portions 70a of the jig 70. As a result, the plurality of magnetic pole pieces 54 are appropriately positioned and are disposed in an annular shape as a whole.

Next, the plurality of magnetic pole pieces 54 are connected to each other by resin molding (Step S4; FIG. 6B).

In this step, first, the output shaft portion 51 and the bearing support ring 55 produced in advance are disposed in a mold for integrally performing resin molding with the plurality of magnetic pole pieces 54, and are positioned. The mold in this case may be the jig 70, or may be a separate body from the jig 70.

Then, the mold including the jig 70 is filled with a resin, and the resin portion 56 is molded (resin casting, injection molding, or the like). Thereafter, the jig 70 is removed, whereby the magnetic modulation body 50 in which the plurality of magnetic pole pieces 54, the output shaft portion 51, and the bearing support ring 55 are fixed (integrated) by the resin portion 56 with required positional accuracy is obtained (FIG. 6C). The outer peripheral surface of the magnetic modulation body 50 is recessed at the connecting portion 54b made of resin with respect to the magnetic pole piece 54 in correspondence with the shape of the inner peripheral surface of the jig 70.

Next, finish machining is performed (Step S5).

In this step, the output shaft portion 51 and the bearing support ring 55 are machined. Both the output shaft portion 51 and the bearing support ring 55 are machined to a predetermined finished shape. In addition, the inner peripheral surface and the outer peripheral surface of the magnetic pole piece 54 may be subjected to finish machining as necessary. The outer peripheral surface may be machined to make the magnetic pole piece 54 and the connecting portion 54b flush with each other. The finish machining is not limited to machining with a lathe, a grinding machine, or the like, and may include heat treatment, surface treatment, polishing by hand, or the like.

In this way, the magnetic modulation body 50 in which the plurality of magnetic pole pieces 54, the output shaft portion 51, and the bearing support ring 55 are integrally connected by the resin portion 56 is completed.

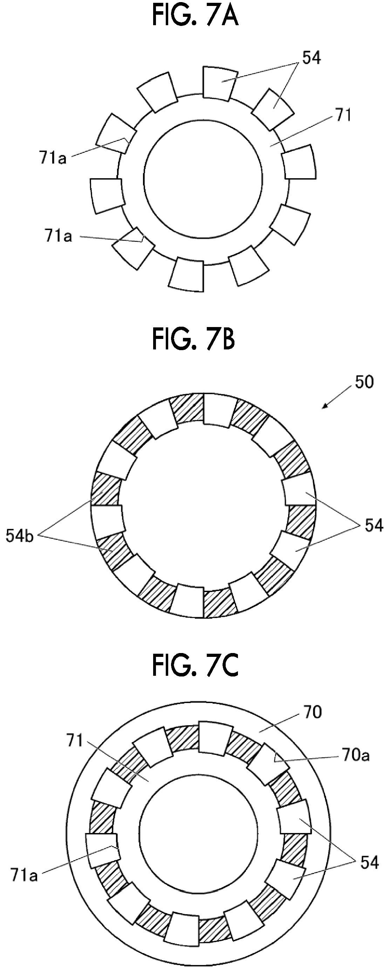

The jig for molding used in Step S3 may be any jig that can position the plurality of magnetic pole pieces 54, and is not limited to a jig that supports the outer diameter portion of the magnetic pole piece 54. For example, as shown in FIG. 7A, a jig 71 that supports the inner diameter side of the magnetic pole piece 54 may be used. A plurality of recessed portions 71a that support the inner diameter portions of the plurality of magnetic pole pieces 54 are formed on the outer peripheral surface of the jig 71, and the resin molding is performed in a state in which the magnetic pole pieces 54 are fitted into the recessed portions 71a. In this case, as shown in FIG. 7B, the inner peripheral surface of the obtained magnetic modulation body 50 is recessed at the connecting portion 54b made of resin with respect to the magnetic pole piece 54, corresponding to the shape of the outer peripheral surface of the jig 71. The jig 71 may be configured to be pulled out in the axial direction after molding, or may have a split shape, a wedge shape of three parts, or the like.

Alternatively, as shown in FIG. 7C, the jig 70 and the jig 71 may be used in combination. In this case, in the obtained magnetic modulation body 50, the connecting portion 54b made of resin is more recessed than the magnetic pole piece 54 at both the inner peripheral surface and the outer peripheral surface.

The jig 70 that supports the outer diameter portion of the magnetic pole piece 54 can more firmly hold the magnetic pole piece 54 than the jig 71 that supports the inner diameter portion. Therefore, the jig 70 that supports the outer diameter portion can more accurately perform the pitch setting (positioning) in the circumferential direction, and it is easy to suppress the movement of the magnetic pole piece 54 due to the shrinkage of the resin during resin cooling.

In addition, in a case where only one of the inner peripheral portion and the outer peripheral portion of the magnetic pole piece 54 is supported by the jig 70 or the jig 71, the circumferential surface on the other side that is not supported by the jig may be supported by a cylindrical surface of another positioning jig. In this case, the connecting portion 54b and the magnetic pole piece 54 are formed to be flush with each other on the circumferential surface on the other side.

In addition, the recessed portion of the jig for supporting (holding) the magnetic pole piece 54 during molding may be only a part of the entire length of the magnetic pole piece 54 in the axial direction, not the entire length. In this case, in a part of the axial direction, the connecting portion 54b has a finished shape that is more recessed than the magnetic pole piece 54.

In addition, the plan-view shape (shape as viewed from the axial direction) of the magnetic pole piece 54 is not limited to a fan shape or a square shape.

For example, the magnetic pole piece 54 may have at least one of the circumferential-direction surfaces (surfaces substantially orthogonal to the circumferential direction) with irregularities. In this case, the shape, position, and the like of the irregularities are not particularly limited. For example, as shown in FIG. 8A, the circumferential-direction surface may be a recessed portion 54d that is gently recessed as a whole, or as shown in FIG. 8B, the magnetic pole piece 54 may have a recessed portion 54e along the tangential direction. Alternatively, as shown in FIG. 8C, the magnetic pole piece 54 may have a protrusion portion 54f along the circumferential direction.

In this way, by providing the irregularities on the circumferential-direction surface of the magnetic pole piece 54, the coupling between the magnetic pole piece 54 and the connecting portion 54b can be made firm. As described above, a force in the radial direction due to the magnet acts on the magnetic pole piece 54, but by providing the irregularities (the recessed portion 54d, the recessed portion 54e, and the protrusion portion 54f) on the circumferential-direction surface, the magnetic pole piece 54 can be prevented from being detached from the connecting portion 54b due to the radial force. From the viewpoint of suppressing the magnetic flux leakage, the recessed portion is preferable to the protrusion portion.

### [Technical Effects of Present Embodiment]

As described above, according to the present embodiment, the plurality of magnetic pole pieces 54 are coupled in the circumferential direction by the resin-made connecting portion 54b.

In this manner, the leakage magnetic flux through the connecting portion can be reduced as compared with a case where the magnetic material integrated with the magnetic pole piece 54 is used as the connecting portion. Therefore, suitable output performance can be obtained.

In addition, during the molding of the connecting portion 54b, the plurality of magnetic pole pieces 54 are individually fitted into the plurality of recessed portions 70a formed on the circumferential surface of the jig 70, and the resin molding is performed. In this manner, the plurality of magnetic pole pieces 54 can be suitably positioned and the connecting portion 54b can be molded.

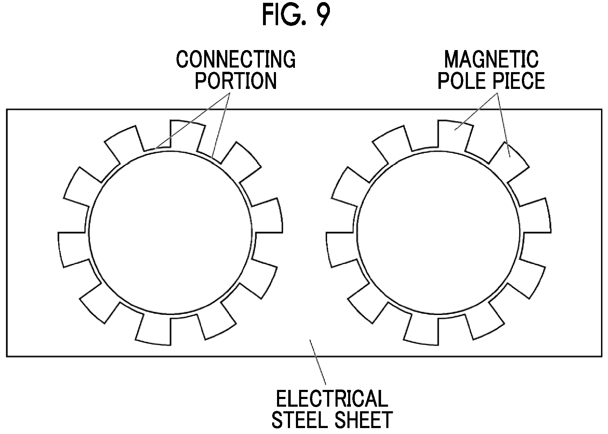

In addition, since the plurality of magnetic pole pieces 54 are punched out from the electrical steel sheet S in a state where the plurality of magnetic pole pieces 54 are not coupled, the magnetic pole pieces 54 (steel sheet pieces 54a) can be arranged on the electrical steel sheet S without waste (see FIG. 5A). Therefore, as shown in FIG. 9, the amount of scrap of the electrical steel sheet can be reduced as compared with a case where the plurality of magnetic pole pieces coupled to the connecting portion are punched out from the electrical steel sheet.

In addition, according to the present embodiment, in the punching step of Step S1 of punching the electrical steel sheet S in the plan-view shapes of the magnetic pole pieces 54 to produce the plurality of steel sheet pieces 54a, a direction of each steel sheet piece 54a corresponding to a radial direction of the magnetic modulation body 50 is aligned with a rolling direction of the electrical steel sheet S.

Since the electrical steel sheet S has a higher magnetic permeability in the rolling direction RD than in the orthogonal direction WD (magnetic flux more easily passes therethrough), the magnetic flux passing through the magnetic pole piece 54 can be suitably made uniform by making the direction of each steel sheet piece 54a corresponding to the radial direction of the magnetic pole piece 54 align with the rolling direction of the electrical steel sheet S. In this manner, the decrease in torque can be suppressed, the torque ripple and the iron loss can be reduced, and the performance of the magnetic modulation gear 1 can be improved.

In addition, according to the present embodiment, the magnetic pole pieces 54 have irregularities on at least one circumferential-direction surface.

In this manner, the coupling between the magnetic pole pieces 54 and the connecting portion 54b can be made firm on the circumferential-direction surface. Therefore, even in a case where a force in the radial direction is applied to the magnetic pole pieces 54 by the magnet, the magnetic pole pieces 54 can be prevented from being detached from the connecting portion 54b.

### [Other]

Hitherto, the embodiment of the present invention has been described. However, the present invention is not limited to the above-described embodiment.

For example, in the above-described embodiment, the outer pole magnet 12 is used as a stator, and the output is taken out from the magnetic modulation body 50 having the magnetic pole pieces 54. However, a configuration is also acceptable in which the magnetic pole piece 54 is fixed, the outer pole magnet 12 is provided on a rotatable low-speed rotor, and output is extracted from the low-speed rotor.

In addition, in the above-described embodiment, a plurality of types of jigs for holding the magnetic pole pieces in an annular shape during molding may be prepared, the number of magnetic pole pieces being different. In this case, the shape of each magnetic pole piece, that is, the shape of the recessed portion of the jig may be common. In this manner, the magnetic modulation bodies having different numbers of magnetic pole pieces can be easily produced by simply using different jigs.

In addition, the details of the above-described embodiment can be appropriately changed without departing from the gist of the present invention.

### Industrial Applicability

As described above, the present invention is useful for obtaining suitable output performance in a magnetic modulation gear.

### Reference Signs List

1 magnetic modulation gear
12 outer pole magnet
41a inner pole magnet
50 magnetic modulation body
51 output shaft portion
52 cylindrical portion
54 magnetic pole piece
54a steel sheet piece
54b connecting portion
54d, 54e recessed portion
54f protrusion portion
55 bearing support ring
56 resin portion
70, 71 jig
70a, 71a: recessed portion
Ax center axis
S electrical steel sheet
RD rolling direction
WD orthogonal direction

## Claims

1. A method for manufacturing a magnetic modulation body, comprising:
a punching step of punching an electrical steel sheet into plan-view shapes of magnetic pole pieces to produce a plurality of steel sheet pieces;
a stacking step of stacking the plurality of steel sheet pieces to produce a plurality of magnetic pole pieces;
a disposition step of disposing the plurality of magnetic pole pieces on a circumferential surface of a cylindrical jig; and
a molding step of performing resin molding such that the plurality of magnetic pole pieces supported by the jig are connected to each other in a circumferential direction with a resin,
wherein a plurality of recessed portions into which the plurality of magnetic pole pieces are individually fitted are formed on the circumferential surface of the jig.

2. The method for manufacturing a magnetic modulation body according to Claim 1, wherein, in the punching step, a direction of each steel sheet piece corresponding to a radial direction of the magnetic modulation body is aligned with a rolling direction of the electrical steel sheet.

3. The method for manufacturing a magnetic modulation body according to Claim 1, wherein the magnetic pole pieces have irregularities on at least one circumferential-direction surface.

4. The method for manufacturing a magnetic modulation body according to Claim 1, further comprising:
after the molding step, a machining step of machining circumferential surfaces of the magnetic pole pieces and a circumferential surface of a connecting portion that connects adjacent ones of the magnetic pole pieces in the circumferential direction to be flush with each other.

5. A magnetic modulation body comprising:
a plurality of magnetic pole pieces arranged in a circumferential direction; and
a connecting portion made of a resin and connecting adjacent ones of the magnetic pole pieces in the circumferential direction,
wherein, on at least one of an inner peripheral surface and an outer peripheral surface, the connecting portion is more recessed than the magnetic pole pieces.

6. The magnetic modulation body according to Claim 5,
wherein, on the inner peripheral surface, the magnetic pole pieces and the connecting portion are flush with each other, and
on the outer peripheral surface, the connecting portion is more recessed than the magnetic pole pieces.

7. The magnetic modulation body according to Claim 5,
wherein the magnetic pole pieces have irregularities on at least one circumferential-direction surface.

8. A magnetic modulation gear comprising:
a magnetic modulation body manufactured by the method for manufacturing a magnetic modulation body according to any one of Claims 1 to 4;
an input shaft having a plurality of inner pole magnets arranged in the circumferential direction and disposed on an inner diameter side of the plurality of magnetic pole pieces; and
a plurality of outer pole magnets arranged in the circumferential direction and disposed on an outer diameter side of the plurality of magnetic pole pieces.
